# EUROPEAN PATENT APPLICATION

(11) **EP 1 056 082 A2**
(43) Date of publication of application: **29.11.2000**
(21) Application number: 00201833.1
(22) Date of filing: 23.05.2000
(51) Int. Cl.: G11B 17/04, G11B 33/08

(54) **Recording and reproducing apparatus of recording medium**

(30) Priority: 28.05.1999 JP 18622199
(71) Applicant: Koninklijke Philips Electronics N.V., 5621 BA Eindhoven (NL)
(72) Inventor: Miyazawa, Yuuichi, c/o Int. Octrooibureau B.V., 5656 AA Eindhoven (NL); Takeda, Kunio,c/o Int. Octrooibureau B.V., 5656 AA Eindhoven (NL); Umehara, Hideaki, c/o Int. Octrooibureau B.V., 5656 AA Eindhoven (NL)
(74) Representative: Wolfs, Marc Johannes Maria

(57) **Abstract**

In a recording and reproducing apparatus of a recording medium in which recording and reproducing means of the recording medium is built in an apparatus body in a floating state and an opening for a placing tray is provided on the apparatus body, it is an object to obtain resistance to shock by securing the floating function of the recording and reproducing means and to prevent dust from entering in the body and obtain good appearances of the apparatus by blocking the opening.

A lid 4 capable of blocking an opening 7 is provided with switch means 5 for switching the engaged and held state so that the lid is engaged and held on the side of an apparatus body 2 when the lid 4 takes a position of the opening 7 and is engaged and held on the side of a tray 6 for placing when the lid is removed from this position.

When a tray 6 for placing is stored in an apparatus body 2, an opening 7 is blocked with a lid 4 and the tray 6 is disengaged from the lid integrated so that recording and reproducing means 3 becomes a floating state to the apparatus body 2.

## Description

A recording and/or reproducing apparatus for an information carrier, comprising an apparatus body in which an opening is provided, recording and/or reproducing means arranged in the apparatus body in a floating state so as to avoid the transmission of shocks to said means if the body is shocked, a tray for placing the information carrier, which tray takes a first position protruding from the body for placing and removing the information carrier through the opening of the body or a second position stored in the body for recording information on the carrier and/or reproducing information from it and a lid capable of blocking the opening of the body.

In a known recording-medium recording and reproducing apparatus, in which recording and reproducing means is stored and held in a floating status within an apparatus main body so as to avoid shock when the apparatus main body receives the shock, and a placing tray for placing a recording medium is inserted/discharged into/from the apparatus main body, conventionally, to ensure a floating function of the recording and reproducing means to the apparatus main body, a lid provided in a front part of the placing tray to close the opening formed in the apparatus main body for insertion/discharge of the placing tray is sufficiently smaller in size than the opening.

In the recording-medium recording and reproducing apparatus having the above construction, when vibration in an environment of use and/or shock caused by operation is applied to the apparatus main body, the recording-medium recording and reproducing means, which is floating, swings with respect to the apparatus main body, in the manner of damper.

Upon this swinging, there is a sufficient gap between the opening of the apparatus main body and the recording and reproducing means side, i.e., the lid provided in the front part of the placing tray, and the opening on the apparatus main body side and the lid on the recording and reproducing means side do not collide with each other. As a result, the apparatus main body side does not apply shock to the recording and reproducing means side.

However, in the conventional recording-medium recording and reproducing apparatus, since the gap between the opening formed in the apparatus main body and the lid provided in the front part of the placing tray of the recording and reproducing means is too wide, dust easily enters the apparatus main body via the gap. Especially, in the apparatus main body, the recording and reproducing means is provided and a recording medium is stored. If dust enters the apparatus main body, the dust interferes the function of the recording and reproducing means, and the dust is attached to the recording medium, disturbing signal pickup. Thus the problems is serious.

Further, if the gap between the opening of the apparatus main body and the lid on the recording and reproducing means side is wide, the lid swings with respect to the opening when the apparatus main body receives shock, and the appearance of the entire apparatus is bad.

Note that to solve the above problem, a construction where the placing tray has a lid having a size closable the opening can be considered. If the size of the lid is large enough to close the opening, the above-described problem does not occur.

However, in this construction, upon closing, as the opening and the lid are in integrated status, when shock is applied to the apparatus main body, the shock is transmitted via the opening, the lid, the placing tray and the like, to the recording and reproducing means. The recording and reproducing means does not receive floating operation but receives the shock.

The present invention has been made in view of the above-described situation, and has an object to provide a recording-medium recording and reproducing apparatus in which recording and reproducing means is stored and held in a floating status within an apparatus main body to avoid shock when the apparatus main body receives the shock. In the apparatus, as the recording and reproducing means can always ensure the floating status with respect to the apparatus main body, and closing at the opening of the apparatus main body by the lid is sufficient to prevent entrance of dust into the apparatus main body, interference in the function of the recording and reproducing means and disturbance of signal pickup due to attachment of dust to the recording medium can be prevented. Further, good outer appearance can be ensured.

To achieve this object, a recording and/or reproducing apparatus in accordance with the invention is characterized in that the lid is removably engaged and held selectively on either the apparatus body near the opening or the tray near the front side of the tray, the recording and reproducing apparatus further comprising switch means for selectively switching the engaged and held state of the lid, so that the lid is engaged and held on the apparatus body by a disengagement of the lid from the tray when the lid takes the position blocking the opening during the movement in the direction towards the second position of the tray, and so that the lid is engaged and held on the tray by a disengagement of the lid from the apparatus body when the lid is removed from the blocking position of the opening during the movement in the direction towards the first position of the tray.

The detailed construction is a recording and reproducing apparatus of a recording medium comprising an apparatus body on which an opening is provided, recording and reproducing means which is stored and held in the apparatus body in a floating state so as to avoid the shock if the body is shocked and has a tray for placing the recording medium whose tray takes a position protruded to the body for placing and removing the recording medium through the opening of the body or a position stored in the body for recording the sound on the medium and reproducing the sound from it and performs the recording and reproducing of the medium, and a lid capable of blocking the opening of the body and removably engaged and held selectively on either the apparatus body side of the opening or the placing tray side of the front of a tray body, the recording and reproducing apparatus further comprising switch means for switching the engaged and held state of the lid so that the lid is engaged and held on the apparatus body side by a disengagement from the placing tray side when the lid takes the position blocking the opening during the movement in the direction stored in the apparatus body of the tray and the lid is engaged and held on the tray side by a disengagement from the apparatus body side when the lid is removed from the blocking position of the opening during the movement in the direction protruded from the apparatus body of the tray.

A particular embodiment of a recording and/or reproducing apparatus in accordance with the invention is characterized in that said switch means is pivotably journalled in the lid and includes a switch lever having a first engagement part capable of engaging with the apparatus body and a second engagement part capable of engaging with the tray, and wherein the switch lever is pushed on the apparatus body to rotate so that the engagement action is switched from the second engagement part to the first engagement part when the lid takes the position blocking the opening, and wherein the switch lever is elastically energized to rotate so that the engagement action is switched from the first engagement part to the second engagement part when the lid is removed from the blocking position of the opening.

That is, in the switch means, when the lid is located in the position closing the opening, the switch lever is pressed toward the apparatus main body side and rotate, to switch the engaging-and-holding operation from the second engagement part to the first engagement part, to cause the lid to be engaged and held on the apparatus main body side. When the lid is located out of the position closing the opening, the switch lever is elastically biased to rotate, to switch the engaging-and-holding operation from the first engagement part to the second engagement part, to cause the lid to be engaged and held on the placing tray side.

Further, the recording-medium recording and reproducing apparatus is particularly a CD player, a CD-R apparatus, a DVD player and the like.

Next, an embodiment of the present invention will be described with reference to the drawings. However, any limitation is not posed on the present invention by the embodiment.

In the drawings:
Fig. 1 shows the structure where the lid is engaged and held by the apparatus main body to close the opening;
Fig. 2 shows the structure where the lid of the embodiment shown in Fig. 1 is out of the opening and is engaged and held by the placing tray, and
Fig. 3is a partially cut-away perspective overview of the embodiment shown in Fig. 1.

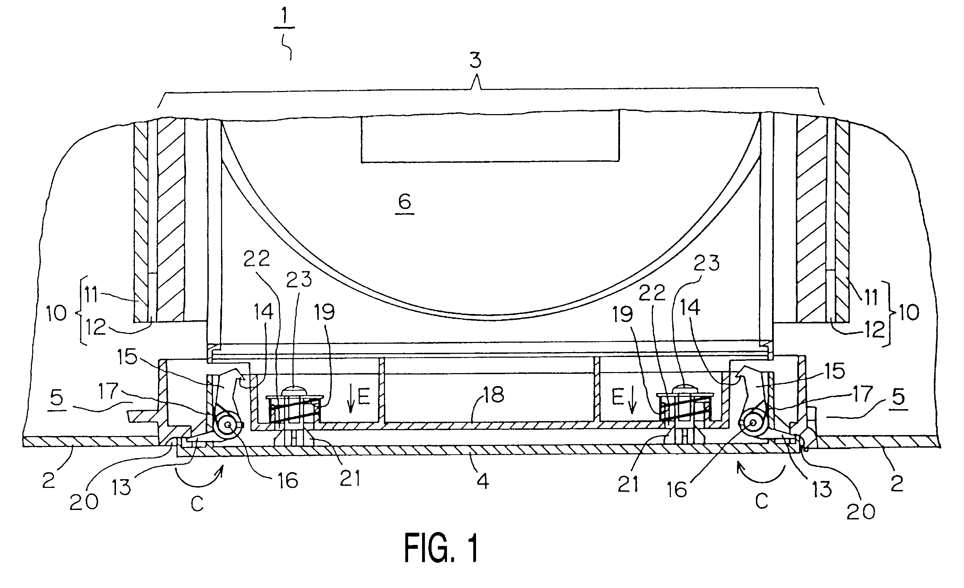

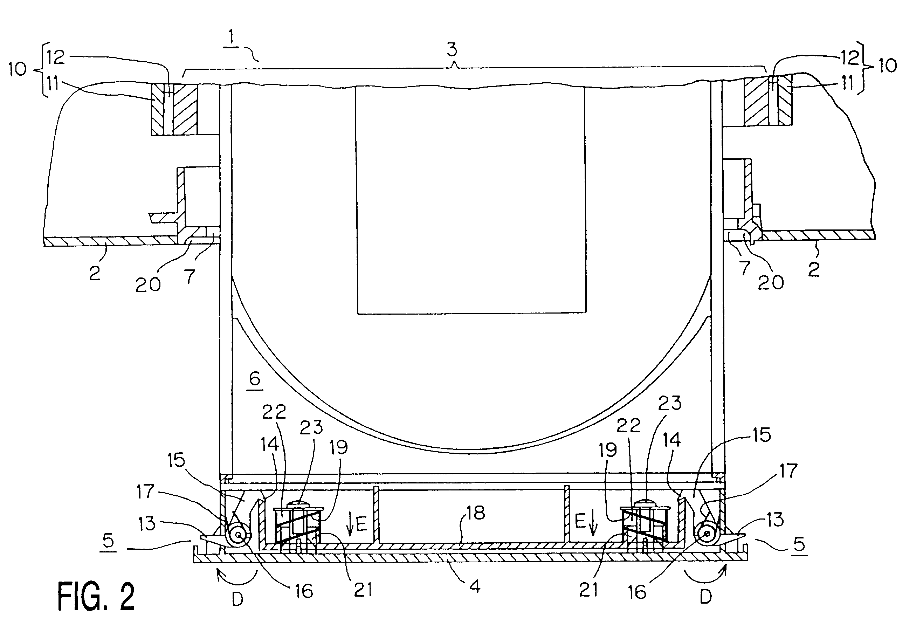

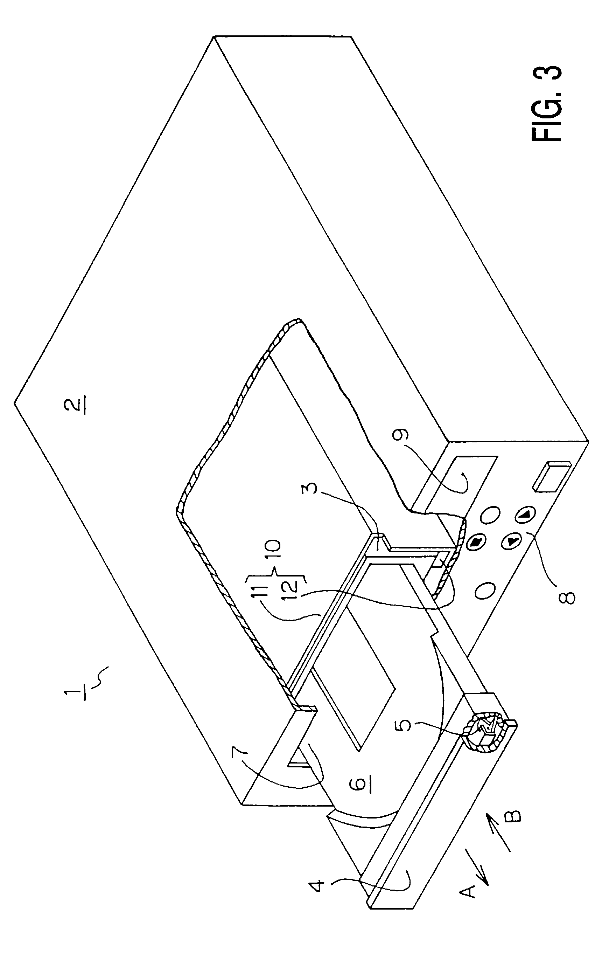

As shown in Figs. 1 to 3, a recording-medium recording and reproducing apparatus 1 has an apparatus main body 2, recording and reproducing means 3, a lid 4, and switch means 5.

An opening 7 for inserting a placing tray 6 for placing a CD as a recording medium (not shown) is provided on a front surface of the apparatus main body 2. An operation portion 8 and a display 9 are provided on the front surface of the apparatus main body 2.

The recording and reproducing means 3, stored and held within the apparatus main body 2, is used for recording and reproduction on the recording medium.

The recording and reproducing means 3 is stored and held in the apparatus main body 2, via floating means 10 to avoid shock when the shock due to vibration in an environment of use or operation is applied to the apparatus main body 2.

The floating means 10 mainly has a frame 11 which is fixed to the apparatus main body 2 and which accommodates the recording and reproducing means 3, and an elastic spacer 12 which is positioned between the recording and reproducing means 3 and the frame 11 when the recording and reproducing means 3 is accommodated in the frame 11 to absorb shock received by the apparatus main body 2 side for the recording and reproducing means 3 side. The recording and reproducing means 3 is supported via four elastic spacers 12 by the frame 11.

The recording and reproducing means 3 is provided with a placing tray 6 on which the recording medium is placed.

The placing tray 6 slides (in directions in arrows A and B) to a position protruded to the apparatus main body 2 for placement and removal of the recording medium via the opening 7 of the apparatus main body 2, and to a position stored in the apparatus main body 2 for recording and reproduction on the recording medium.

The lid 4 closes the opening 7 of the apparatus main body 2. The lid 4 is removably engaged and held selectively by one of the apparatus main body 2 side and the placing tray 6 side in the front part of the tray main body, at the opening 7.

Further, a holding step member 20, having a shape corresponding to the outer periphery of the lid 4, to hold the lid 4, is formed in the opening 7.

The switch means 5 switches the engaging-and-holding operation such that when the placing tray 6 slides in the direction in which it is stored in the apparatus main body 2 (the arrow B direction) and the lid 4 moves to the position closing the opening 7, the switch means 5 releases a status where the lid 4 is engaged and held on the placing tray 6 side, and causes the lid to be engaged and held on the apparatus main body 2 side, and when the placing tray 6 slides in the direction in which it is protruded from the apparatus main body 2 (the arrow A direction), the switch means releases the status where the lid 4 out of the position closing the opening 7 is engaged and held on the apparatus main body 2 side, and causes the lid to be engaged and held on the placing tray 6 side.

The switch means 5 has switch levers 15, springs 17 which bias the switch levers 15 to rotate in arrow D directions, an engaging member 18 which engages with the switch levers 15 and the holding step member 20.

The switch levers 15 are pivotally supported by the lid 4, and are provided with first engaging members 13 which engage with the apparatus main body 2 side and second engaging members 14 which engages with the placing tray 6.

When the lid 4 is in a position closing the opening 7, the switch levers 5 are pressed toward the apparatus main body 2 side and rotate in arrow C directions, to switch the engaging operation from the second engaging members 14 to the first engaging members 13, i.e., switches the engagement with the placing tray 6 side to the engagement with the apparatus main body 2 side.

On the other hand, when the lid 4 is out of the position closing the opening 7, the switch levers 15 are biased by the spring 17 and rotate in the arrow D directions, to switch the engaging operation from the first engaging members 13 to the second engaging members 14, i.e., switches the engagement with the apparatus main body 2 to the engagement with the placing tray 6.

Note that numeral 16 denotes shafts which pivotally support the switch levers 15.

Further, numeral 18 denotes the engaging member provided in the front part of the placing tray 6 and engaged by the second engaging members 14 of the switch levers 15. The engaging member 18 is connected to the lid 4 in a floating status.

That is, two connection rods 21 are formed in the rear of the lid 4 and through holes 22 through which the connection rods 21 are inserted are formed in the engaging member 18. The connection rods 21 are inserted into the through holes 22, and stoppers 23 to hold the connection status are provided.

The engaging member 18 is biased by a spring 19 to the lid 4 in an arrow E direction.

The recording-medium recording and reproducing apparatus 1 is constructed as described above. Hereinbelow, the operation of the recording-medium recording and reproducing apparatus 1 will be described.

A user operates the operation portion 8 of the recording-medium recording and reproducing apparatus 1 to turn a main power source on, then starts a drive motor (not shown) to slide the placing tray 6 in the arrow A direction, to the position protruded to the apparatus main body 2.

Then the user places a desired CD to be played on the placing tray 6.

At this time, in the switch means 5, the switch levers 15 do not receive a pressing force from the apparatus main body 2 but receive biasing forces from the springs 17, to rotate in the arrow D directions, the second engaging members 14 engage with the engaging member 18 and the first engaging members 13 are in an engagement-released status. Accordingly, the lid 4 pivotally supporting the switch levers 15 is engaged and held on the placing tray 6 side.

Then, the user operates the operation portion 8 to cause the recording and reproducing apparatus 3 perform reproduction (to play) the placed CD . In accordance with the operation, the drive motor starts to slide the placing tray 6 in the direction in which it is stored in the apparatus main body 2, i.e., in the arrow B direction.

When the placing tray 6 slides in the arrow B direction and the lid 4 moves to the position closing the opening 7, the switch levers 15 receive the pressing force by slide movement from the apparatus main body 2 and rotate in the arrow C directions against the biasing forces of the springs 17. By the rotation of the switch levers 15 in the arrow C directions, the second engaging members 14 releases the engagement with the engaging member 18.

Further, the placing tray 6 slides in the arrow B direction to the predetermined position in the recording and reproducing means 3, while the lid 4 is continuously in the status where it is in contact with the apparatus main body 2 in the floating status with respect to the placing tray 6 by the springs 19. As a result, the status where the opening 7 is closed is held. At this time, the lid 4 engages with the holding step member 20.

That is, when the lid 4 moves to the position closing the opening 7, the lid 4 is switched from the status where it is engaged and held on the placing tray 6 side by the operation of the switch means 5 to the status where it is engaged and held on the apparatus main body 2 side.

Note that in the placing tray 6, when the placed CD comes to the predetermined position for recording/reproduction, a limiter (not shown) operates and the drive motor stops, and the placing tray 6 stops its slide movement in the arrow B direction.

Then, the recording and reproducing means 3 starts recording/reproduction on the CD placed on the placing tray 6.

When the recording and reproducing means 3 has completed recording/reproduction on the CD, to perform recording/reproduction on another CD, the user operates the operation portion 8 to case the placing tray 6 to move to the position protruded to the apparatus main body 2, for exchanging the CDs.

Then, the drive motor starts to slide the placing tray 6 in the arrow A direction to the apparatus main body 2. With the slide movement of the placing tray 6 in the arrow A direction, the lid 4 also slides in the arrow A direction, however, the switch levers 15 pivotally supported by the lid 4 also slide in the arrow A direction to the apparatus main body 2. Thus the pressing force from the apparatus main body 2 to the first engaging members 13 of the switch levers 15 is released, and the engagement-holding of the lid 4 on the apparatus main body 2 side is released.

At this time, in the switch means 5, as the pressing force from the apparatus main body 2 to the first engaging members 13 is released, the switch levers 15 are rotated in the arrow D directions by the biasing forces of the springs 17.

Similarly, as the placing tray 6 slides in the arrow A direction, the engaging member 18 moves in the arrow E direction to the lid 4 by the biasing forces of the springs 19.

Then, in the switch means 5, the second engaging members 14 of the switch levers 15 rotate in the arrow D directions, and engage with the engaging member 18 moved in the arrow E direction to the lid 4.

Accordingly, in the switch means 5, the switch levers 15 switch the engagement with the apparatus main body 2 side to the engagement with the placing tray 6 side. As the switch levers 15 are pivotally supported by the lid 4 and integral with the lid, the switching of the engagement is switching of engaging-and-holding of the lid 4 from the apparatus main body 2 side to the placing tray 6 side.

Then, the lid 4 is engaged and held by the placing tray 6, and slides in the arrow A direction.

As described above, in the recording-medium recording and reproducing apparatus 1, when the lid 4 moves to the position closing the opening 7 of the apparatus main body 2, the switch means 5 causes the lid 4 to be engaged and held on the apparatus main body 2, while when the lid 4 is out of the position closing the opening 7, the switch means causes the lid 4 to be engaged and held on the placing tray 6 side. Further, as the recording and reproducing means 3 is always in the floating status with respect to the apparatus main body 2 side by the floating means 10 and the springs 19, even if vibration occurs in the environment of use or shock is applied to the apparatus main body 2, the recording and reproducing means 3 does not receive shock and no trouble occurs in the operation.

Further, in the recording-medium recording and reproducing apparatus 1, the opening 7 is completely closed by the lid 4 without any gap, dust does not enter inside the apparatus main body 2 especially on the recording and reproducing means 3 side. Accordingly, there is no fear that the function of the recording and reproducing means is interfered or the dust is attached to the recording medium to disturb signal pickup.

In addition, in the recording-medium recording and reproducing apparatus 1, since there is no gap between the lid 4 and the opening 7, good outer appearance of the entire apparatus is ensured in comparison with a case where there is a gap.

The recording-medium recording and reproducing apparatus 1 performs recording and reproduction on a CD, however, it may be an apparatus especially for recording or reproduction on a CD, a CD-R apparatus, a DVD player and the like.

In the recording-medium recording and reproducing apparatus 1, in the switch means 5, the switch levers 15 are pivotally supported by the lid 4, and the lid 4 is engaged and held on the apparatus main body 2 side when the lid 4 is positioned on the opening 7 of the apparatus main body 2, while is engaged and held on the placing tray 6 side when the lid is out of the position.

Further, it may be arranged, as the switch means, such that a selector switch to operate between the lid 4 and the opening 7 is provided, electromagnets are provided around the opening 7 and in the front part of the placing tray 6, and a magnetic-sensitive member is provided in the lid 4. In this arrangement, the electromagnet provided around the opening 7 and the electromagnet provided in the front part of the placing tray 6 are operated by the selector switch.

In the recording-medium recording and reproducing apparatus 1, the lid 4 is connected to the placing tray 6 movably in the arrow E and opposite directions.

Further, it may be arranged such that the lid 4 and the placing tray 6 are independent of each other, and the first engaging members 13 of the switch levers 15 have a hook shape, and engaged members to be hooked by the hook-shaped first engaging members 13 are provided on the apparatus main body 2 side, and that when the lid is in the position on the opening 7, the lid 4 engages with the engaged members provided on the apparatus main body 2 and the lid 4 is engaged and held on the apparatus main body 2 side, and the placing tray 6 is in a free status from the lid 4 and the apparatus main body 2 side.

In the present invention, the recording-medium recording and reproducing means is stored in the floating status with respect to the apparatus main body, and the switch means is provided for causing the lid to close the opening formed in the apparatus main body to be engaged and held on the apparatus main body side when the lid is positioned on the opening, while causing the lid to be engaged and held on the placing tray side when the lid is out of the position. This can always ensure the floating function of the recording and reproducing means, further, prevents entrance of dust within the apparatus main body. Thus, interference in the function of the recording and reproducing means or attachment of dust to the recording medium can be prevented, further, the recording-medium recording and reproducing apparatus with excellent outer appearance of the entire apparatus is provided.

### Explanation of Reference Numerals

- 1:: Recording-medium recording and reproducing apparatus
- 2:: Apparatus main body
- 3:: Recording and reproducing means
- 4:: Lid
- 5:: Switch means
- 6:: Placing tray
- 7:: Opening
- 10:: Floating means
- 13:: First engaging member
- 14:: Second engaging member
- 15:: Switch lever
- 20:: Holding step member

## Claims

1. A recording and/or reproducing apparatus for an information carrier, comprising an apparatus body in which an opening is provided, recording and/or reproducing means arranged in the apparatus body in a floating state so as to avoid the transmission of shocks to said means if the body is shocked, a tray for placing the information carrier, which tray takes a first position protruding from the body for placing and removing the information carrier through the opening of the body or a second position stored in the body for recording information on the carrier and/or reproducing information from it and a lid capable of blocking the opening of the body, characterized in that the lid is removably engaged and held selectively on either the apparatus body near the opening or the tray near the front side of the tray, the recording and reproducing apparatus further comprising switch means for selectively switching the engaged and held state of the lid, so that the lid is engaged and held on the apparatus body by a disengagement of the lid from the tray when the lid takes the position blocking the opening during the movement in the direction towards the second position of the tray, and so that the lid is engaged and held on the tray by a disengagement of the lid from the apparatus body when the lid is removed from the blocking position of the opening during the movement in the direction towards the first position of the tray.

2. A recording and reproducing apparatus for an information carrier as claimed in claim 1, wherein said switch means is pivotably journalled in the lid and includes a switch lever having a first engagement part capable of engaging with the apparatus body and a second engagement part capable of engaging with the tray, and wherein the switch lever is pushed on the apparatus body to rotate so that the engagement action is switched from the second engagement part to the first engagement part when the lid takes the position blocking the opening, and wherein the switch lever is elastically energized to rotate so that the engagement action is switched from the first engagement part to the second engagement part when the lid is removed from the blocking position of the opening.
